**Europäisches Patentamt**

(19) **European Patent Office**

**Office européen des brevets**

(11) Veröffentlichungsnummer: **0 017 035**
**B1**

(12) # EUROPÄISCHE PATENTSCHRIFT

(45) Veröffentlichungstag der Patentschrift:
17.08.83

(51) Int. Cl.³: **H 04 L 11/00**

(21) Anmeldenummer: **80101277.4**

(22) Anmeldetag: **12.03.80**

(54) Schaltungsanordnung zur Übertragung von digitalen Signalen zwischen mit unterschiedlichen Datenübertragungsprozeduren und mit unterschiedlichen Datenformaten arbeitenden Sende-/Empfangseinrichtungen.

(30) Priorität: **30.03.79 DE 2912649**

(43) Veröffentlichungstag der Anmeldung:
**15.10.80 Patentblatt 80/21**

(45) Bekanntmachung des Hinweises auf die Patenterteilung:
**17.08.83 Patentblatt 83/33**

(84) Benannte Vertragsstaaten:
**AT BE CH DE FR GB IT LU NL SE**

(56) Entgegenhaltungen:
**DE-A-2 416 730**
**FR-A-2 145 947**
**US-A-3 935 391**
**EVOLUTIONS IN COMPUTER COMMUNICA-TIONS — PROCEEDINGS OF THE FOURTH INTERNATIONAL CONFERENCE ON COMPUTER COMMUNICATION, Kyoto 26-29 September 1978, North Holland Publishing Company, Amsterdam, New York, Oxford, ALTEHAGE et al.: »The public**

(73) Patentinhaber: **SIEMENS AKTIENGESELLSCHAFT, Berlin und München Wittelsbacherplatz 2, D-8000 München 2 (DE)**

(72) Erfinder: **Bergmann, Ola, Dipl.-Phys, Mauthäuslstrasse 39, D-8000 München 70 (DE)**
Erfinder: **Hagen, Rolf, Dipl.-Ing., Fasanenstrasse 38, D-8025 Unterhaching (DE)**
Erfinder: **Harenberg, Jürgen, Schusterstrasse 15, D-8000 München 71 (DE)**
Erfinder: **Steiner, Herbert, Gut Schwaigwall, D-8191 Gelting (DE)**

**switched data network of the Deutsche Bundespost: Three years of experience with the electronic data switching system EDS — Future development of EDS«, Seiten 9—16**
**INTERNATIONAL SWITCHING SYMPOSIUM 25—29 Oktober 1976, Kyoto, Japan Tokyo, JP, MASATO CHIBA et al.: »A commercial test of digital data networks and its future«, Seiten 441—1—1 bis 441—1—8**

**Schaltungsanordnung zur Übertragung von digitalen Signalen zwischen mit unterschiedlichen Datenübertragungsprozeduren und mit unterschiedlichen Datenformaten arbeitenden Sende-/Empfangseinrichtungen**

Die Erfindung bezieht sich auf eine Schaltungsanordnung zur Übertragung von digitalen Signalen zwischen mit einer ersten Datenübertragungsprozedur und einem ersten Datenformat arbeitenden Sende- und/oder Empfangseinrichtungen und mit einer von der ersten Datenübertragungsprozedur verschiedenen zweiten Datenübertragungsprozedur sowie mit einem von dem ersten Datenformat verschiedenen zweiten Datenformat arbeitenden Sende- und/oder Empfangseinrichtungen über eine Vermittlungsanlage, wobei die für einen Betrieb mit der ersten Datenübertragungsprozedur und dem ersten Datenformat ausgelegten Sende- und/oder Empfangseinrichtungen und die für einen Betrieb mit der zweiten Datenübertragungsprozedur und dem zweiten Datenformat ausgelegten Sende- und/oder Empfangseinrichtungen an für die jeweilige Datenübertragungsprozedur und das jeweilige Datenformat vorgesehenen gesonderten Anschlußschaltungen einer ersten Gruppe bzw. einer zweiten Gruppe von Anschlußschaltungen der Vermittlungsanlage angeschlossen sind, und wobei an wenigstens einer Anschlußschaltung jeder Gruppe der Anschlußschaltungen eine Umsetzeinrichtung angeschlossen ist, in die jeweils sämtliche von einer Sendeeinrichtung abgegebene, zu einer Nachricht gehörende Signale entsprechend der ersten Datenübertragungsprozedur und mit dem ersten Datenformat bzw. entsprechend der zweiten Datenübertragungsprozedur und mit dem zweiten Datenformat einschreibbar sind und aus der danach sämtliche zu der jeweiligen Nachricht gehörende Signale ausspeicherbar und mit der zweiten bzw. mit der ersten Datenübertragungsprozedur und dem zweiten bzw. dem ersten Datenformat an die für eine Datensignalaufnahme in Frage kommende Empfangseinrichtung abgebbar sind.

Eine Schaltungsanordnung der vorstehend bezeichneten Art ist in allgemeiner Form bereits bekannt (Zeitschrift »Proceedings of the Fourth International Conference on Computer Communication«, Kyoto-Japan, 26-29 September 1978, North Holland Publishing Company, Amsterdam, New York, Oxford, Seiten 9 bis 16). Über die eigentliche Realisierung der betreffenden Schaltungsanordnung und der dabei verwendeten Umsetzeinrichtung ist bisher jedoch nichts bekannt.

Der Erfindung liegt demgemäß die Aufgabe zugrunde, einen Weg zu zeigen, wie bei einer Schaltungsanordnung der eingangs genannten Art die Umsetzeinrichtung mit relativ geringem schaltungstechnischen Aufwand realisiert werden kann.

Gelöst wird die vorstehend aufgezeigte Aufgabe bei einer Schaltungsanordnung der eingangs genannten Art erfindungsgemäß dadurch, daß die Umsetzeinrichtung eine Speicheranordnung mit wahlfreiem Zugriff enthält, die mit ihrem Dateneingang/Datenausgang über Schnittstellenschaltungen an jeweils einer Anschlußschaltung jeder Gruppe von Anschlußschaltungen angeschlossen ist, daß die Schnittstellenschaltungen und die Speicheranordnung mit einer Steuerschaltung verbunden sind, welche auf das Auftreten einer Bedienungsanforderung von einer der Schnittstellenschaltungen her, welche an einer Anschlußschaltung einer der beiden Gruppen von Anschlußschaltungen angeschlossen ist, zunächst eine Verbindung zwischen dieser Schnittstellenschaltung und der Speicheranordnung und sodann eine Verbindung zwischen der Speicheranordnung und einer Schnittstellenschaltung herstellt, die an einer zu der anderen Gruppe von Anschlußschaltungen gehörenden Anschlußschaltung angeschlossen ist, daß die Steuerschaltung einen Mikroprozessor enthält, der mit einer Datenbusleitung, einer Adreßbusleitung und einer Steuerbusleitung sowohl an den Schnittstellenschaltungen und an der Speicheranordnung als auch an einem Programmspeicher angeschlossen ist, daß die an einer Anschlußschaltung der zweiten Gruppe von Anschlußschaltungen angeschlossene Schnittstellenschaltung mit ihrer Signalisierungs-Umsetzschaltung und mit ihrer Datenübertragungsschaltung eingangsseitig gemeinsam und ausgangsseitig über eine Weichenschaltung an der betreffenden Anschlußschaltung der zweiten Gruppe von Anschlußschaltungen angeschlossen ist, und daß die Weichenschaltung für die Übertragung von Datensignalen und Signalisierungsinformationen in unterschiedlichen Stellungen eingestellt ist.

Die Erfindung bringt den Vorteil mit sich, daß insgesamt mit einem besonders geringen schaltungstechnischen Aufwand in der Umsetzeinrichtung ausgekommen werden kann, um dennoch die Übertragung von digitalen Signalen zwischen mit unterschiedlichen Datenübertragungsprozeduren und unterschiedlichen Datenformaten arbeitenden Sende- und Empfangseinrichtungen vorzunehmen. Dabei kann im übrigen in vorteilhafter Weise eine leichte und schnelle Anpassung an verschiedene Datenübertragungsprozeduren und Datenformate vorgenommen werden.

Von Vorteil ist es, wenn wenigstens eine Schnittstellenschaltung mit einem Unterbrechungs-Steuereingang der Steuerschaltung verbunden ist, welche durch Aufnahme eines Unterbrechungssignals an diesem Eingang die Herstellung einer Verbindung zwischen der Speicheranordnung und der Anschlußschaltung wirksam steuert, mit der die betreffende Schnittstellenschaltung verbunden ist. Hierdurch ergibt sich der Vorteil eines besonders geringen schaltungstechnischen Aufwands für die Berücksichtigung von Bedienungsanforderungen, welche die Aufnahme von Signalen in der Umsetzeinrichtung erforderlich machen.

Zweckmäßigerweise ist die an einer Anschlußschaltung der ersten Gruppe von Anschlußschaltungen angeschlossene Schnittstellenschaltung zur Parallel-Serien-Umsetzung bzw. zur Serien-Parallel-Umsetzung der ihr eingangsseitig jeweils zugeführten Signale entsprechend ausgelegt, ferner enthält die an einer Anschlußschaltung der zweiten Gruppe von Anschlußschaltungen angeschlossene Schnittstellenschaltung eine für die Aufnahme und Umsetzung von ihr eingangsseitig jeweils zugeführten Signalisierungsinformationen dienende Signalisierungs-Umsetzschaltung mit Serien-Parallel-/Parallel-Serien-Umsetzfunktionen und eine Datenübertragungsschaltung, die lediglich bei der Datenübertragung zwischen der Speicheranordnung und der Sende/Empfangseinrichtung wirksam ist, die an einer der zu der zweiten Gruppe von Anschlußschaltungen gehörenden Anschlußschaltungen angeschlossen ist. Hierdurch ergibt sich der Vorteil, daß mit einem besonders geringen schaltungstechnischen Aufwand ausgekommen werden kann, um die Umsetzeinrichtung mit den Anschlußschaltungen der ersten und zweiten Gruppe von Anschlußschaltungen verbinden zu können.

Anhand einer Zeichnung wird die Erfindung nachstehend an einem Ausführungsbeispiel näher erläutert.

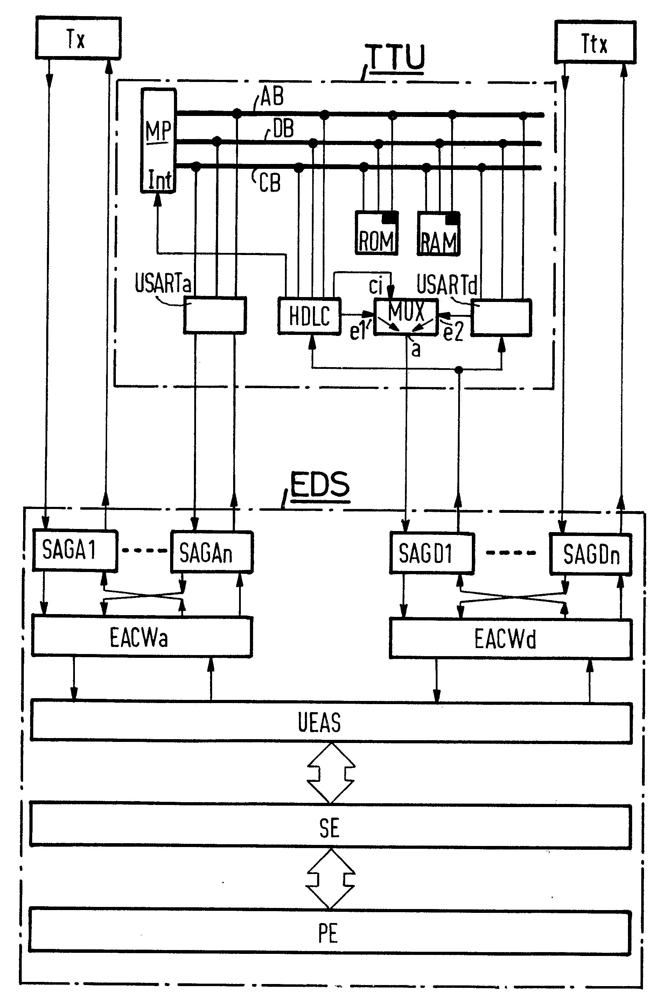

In der Zeichnung ist ausschnittsweise eine bekannte elektronische Datenvermittlungsanlage EDS dargestellt (siehe »Siemens-Zeitschrift«, Heft 2, 1977, Seiten 82 bis 87). Von dieser Datenvermittlungsanlage EDS sind im vorliegenden Fall lediglich zu einer ersten Gruppe von Anschlußschaltungen gehörende Anschlußschaltungen SAGA1 bis SAGAn, zu einer zweiten Gruppe von Anschlußschaltungen gehörende Anschlußschaltungen SAGD1 bis SAGDn, den einzelnen Gruppen von Anschlußschaltungen zugehörige Eingabe-/Ausgabe-Codewandler EACWa bzw. EACWd, eine Übertragungsablaufsteuerung UEAS, eine Speichereinheit SE und eine Programmsteuereinheit PE dargestellt. Die Anschlußschaltungen SAGA1 bis SAGAn dienen dazu, digitale Signale polaritätswechselweise zu verarbeiten. Die zu der anderen Gruppe von Anschlußschaltungen gehörenden Anschlußschaltungen SAGD1 bis SAGDn dienen zur Verarbeitung von sogenannten Bitgruppen, das sind jeweils eine Mehrzahl von Bits umfassende digitale Signale. Derartige Bitgruppen werden zuweilen auch als Envelopes bezeichnet.

Von den in der Zeichnung angedeuteten Anschlußschaltungen sind die Polaritätswechsel verarbeitenden Anschlußschaltungen mit Sende-/Empfangseinrichtungen verbunden, welche digitale Signale mit einer ersten Datenübertragungsrate und in einem ersten Datenformat abgeben und aufnehmen. Bei diesen Sende-/Empfangseinrichtungen mag es sich um übliche Fernschreib- bzw. Telex-Stationen handeln, von denen eine in der Zeichnung mit Tx angedeutet ist. Diese Telex-Stationen mögen mit einer Datenübertragungsrate von 50 Bd und unter Ausnutzung des internationalen Telegrafenalphabets Nr. 2 arbeiten, also mit einem Start-Stop-Datenformat. Die digitale Signale in Form von Bitgruppen bzw. Envelopes verarbeitenden Anschlußschaltungen der in der Zeichnung dargestellten zweiten Gruppe von Anschlußschaltungen SAGD1 bis SAGDn sind mit Sende-/Empfangseinrichtungen verbunden, die digitale Signale seriell in Form von Bitgruppen abgeben bzw. aufnehmen können. Bei diesen Sende-/Empfangseinrichtungen mag es sich im vorliegenden Fall um Bürofernschreibstationen handeln, die auch als Teletex-Stationen bezeichnet werden, von denen eine in der Zeichnung mit Ttx angedeutet ist. Diese Bürofernschreibstationen vermögen digitale Signale mit einer Datenübertragungsrate von 2400 Bit/sec abzugeben und aufzunehmen, und zwar als synchrone Datensignale. Dies bedeutet, daß zu jeweils einer Bitgruppe gehörende Bits nicht durch Start- und Stop-Zeichen festgelegt sind.

Mit der in der Zeichnung dargestellten Datenvermittlungsanlage ist erfindungsgemäß eine Umsetzeinrichtung TTU verbunden. Diese Umsetzeinrichtung TTU, die gegebenenfalls in einer Mehrzahl vorgesehen sein kann, weist gewissermaßen zwei unterschiedliche Anschlußseiten auf. Mit ihrer einen Anschlußseite ist die Umsetzeinrichtung TTU an einer der zu der ersten Gruppe von Anschlußschaltungen gehörenden Anschlußschaltungen SAGA1 bis SAGAn angeschlossen. Mit ihrer anderen Anschlußseite ist die Umsetzeinrichtung TTU an einer der zu der zweiten Gruppe von Anschlußschaltungen gehörenden Anschlußschaltungen SAGD1 bis SAGDn angeschlossen. Dabei ist die Umsetzeinrichtung TTU auf ihrer genannten einen Anschlußseite mittels einer Schnittstellenschaltung USARTa eingangs- und ausgangsseitig mit der Anschlußschaltung SAGAn der ersten Gruppe von Anschlußschaltungen verbunden. Auf ihrer anderen Anschlußseite ist die Umsetzeinrichtung TTU an der Anschlußschaltung SAGD1 der zweiten Gruppe von Anschlußschaltungen mit einer weiteren Schnittstellenschaltung angeschlossen, die eine Signalisierungs-Umsetzschaltung USARTd und eine Datenübertragungsschaltung HDLC enthält. Diese beiden Schaltungen sind mit ihren einen Eingängen gemeinsam am Ausgang der Anschlußschaltung SAGD1 angeschlossen. Diese Anschlußschaltung SAGD1 ist mit ihrem Eingang am Ausgang a einer Weichenschaltung MUX angeschlossen, die mit Signaleingängen e2, e1 an Ausgängen der zu der gerade betrachteten Schnittstellenschaltung gehörenden Schaltungen USARTd und HDLC angeschlossen ist. Mit einem Steuereingang $c_i$ ist die Weichenschaltung MUX an einem Steuerausgang der Datenübertragungsschaltung HDLC angeschlossen. Je nachdem, welches Steuersignal dem Steuereingang $c_i$ der Weichenschaltung MUX zugeführt wird, verbindet diese ihren Ausgang a entweder mit ihrem Signaleingang e2 oder mit ihrem Signaleingang e1. Dabei kann so vorgegangen sein, daß die Weichenschaltung MUX bei Fehlen eines entsprechenden Steuersignals ihren Ausgang a mit ihrem Signaleingang e2 verbindet bzw. diese Verbindung durchschaltet. An dieser Stelle sei noch angemerkt, daß die mit den beiden Signaleingängen e1, e2 verbundenen Ausgänge der Datenübertragungsschaltung HDLC bzw. der Signalisierungs-Umsetzschaltung USARTd an diesen Ausgängen nicht Signale abgeben, die ihnen an den zuvor betrachteten Eingängen zugeführt worden sind. Vielmehr geben die betreffenden Schaltungen an den gerade erwähnten Ausgängen Signale dann ab, wenn ihnen an noch zu betrachtenden weiteren Eingängen bzw. Anschlüssen entsprechende Signale zugeführt werden. Bezüglich der Steuerung der Weichenschaltung MUX sei noch bemerkt, daß ein dazu erforderliches Steuersignal auf entsprechende Ansteuerung der Datenübertragungsschaltung HDLC von der noch näher zu betrachtenden Steuerschaltung der Umsetzeinrichtung TTU abgegeben werden mag.

Die vorstehend betrachteten beiden Schnittstellenschaltungen — einmal die Schnittstellenschaltung USARTa und zum anderen die Schnittstellenschaltung mit der Datenübertragungsschaltung HDLC und der Signalisierungs-Umsetzschaltung USARTd — sind mit einer Anzahl von Anschlüssen mit der bereits erwähnten Steuerschaltung der Umsetzeinrichtung TTU verbunden. Diese Steuerschaltung enthält im vorliegenden Fall einen Mikroprozessor MP mit zugehörigem Programmspeicher ROM. In der Zeichnung ist in diesem Zusammenhang angedeutet, daß eine Anzahl von Busleitungen vorgesehen ist, an denen der Mikroprozessor MP und der Programmspeicher ROM angeschlossen sind, bei dem es sich vorzugsweise um einen Lesespeicher handeln mag. Eine Busleitung, AB, stellt eine Adreßbusleitung dar. Eine weitere Busleitung, DB, stellt eine Datenbusleitung dar. Die letzte noch dargestellte Busleitung, CB, stellt eine Steuerbusleitung dar. An diesen drei Busleitungen AB, DB und CB sind die erwähnten Schnittstellenschaltungen mit entsprechenden Anschlüssen angeschlossen. Außerdem ist an den drei Busleitungen noch ein Speicher RAM mit entsprechenden Anschlüssen angeschlossen. Bei diesem Speicher RAM handelt es sich um einen Speicher mit wahlfreiem Zugriff. Wie weiter unten noch ersichtlich werden wird, dient dieser Speicher RAM dazu, Signale zwischenzuspeichern, die von einer Telex-Station an eine Teletex-Station oder von einer Teletex-Station zu einer Telex-Station zu übertragen sind. Diese Signale umfassen sowohl Signalisierungsinformationen als auch Nachrichteninformationen.

Neben den vorstehend erläuterten Schaltungsverbindungen ist noch auf eine weitere Schaltungsverbindung hinzuweisen. Die Datenübertragungsschaltung HDLC der Umsetzeinrichtung TTU ist nämlich mit einem gesonderten Ausgang an einem sogenannten Unterbrechungseingang Int des Mikroprozessors MP angeschlossen. Über diese Schaltverbindung kann der Mikroprozessor MP in seinem Betrieb von der Datenübertragungsschaltung HDLC her veranlaßt werden, die Abwicklung von Vorgängen zu steuern, die die Datenübertragung betreffen, wie dies weiter unten noch näher ersichtlich werden wird.

Nachdem zuvor der Aufbau der in der Zeichnung dargestellten Schaltungsanordnung erläutert worden ist, sei nunmehr die Arbeitsweise dieser Schaltungsanordnung näher betrachtet. Dabei wird zunächst prinzipiell auf diejenigen Vorgänge eingegangen, die für die Übertragung von digitalen Signalen zwischen einer Telex-Station Tx und einer Bürofernschreib- bzw. Teletex-Station Ttx maßgebend sind. Auf die generellen Funktionen der Datenvermittlungsanlage EDS braucht in diesem Zusammenhang nicht weiter eingegangen zu werden, da diese Funktionen bereits hinlänglich bekannt sind (siehe die oben genannte Zeitschrift).

Zur Erläuterung der Arbeitsweise der in der Zeichnung dargestellten Schaltungsanordnung sei angenommen, daß die Telex-Station Tx eine Fernschreibnachricht — d. h. ein komplettes Fernschreiben — mit 50 Bd aussendet. Die diese Fernschreibnachricht betreffenden digitalen Signale (und zwar sowohl die Signalisierungsinformationen wie auch die Nachrichteninformationen) gelangen über die Anschlußschaltung SAGA1 in die Datenvermittlungsanlage EDS hinein, welche aufgrund ihrer Vermittlungsfunktion diese digitalen Signale über die Anschlußschaltung SAGAn an die Schnittstellenschaltung USARTa der Umsetzeinrichtung TTU abgibt. Die Schnittstellenschaltung USARTa mag im vorliegenden Fall die ihr seriell zugeführten digitalen Signale in eine Parallelform umsetzen und über die Datenbusleitung DB an den Speicher RAM abgeben. Dabei werden sämtliche zu der Fernschreibnachricht gehörenden digitalen Signale in diesen Speicher RAM eingespeichert, bevor weitere Übertragungsvorgänge ablaufen.

Nachdem die gesamte Fernschreibnachricht in dem Speicher RAM eingespeichert ist, wird sie aus diesem Speicher RAM wieder ausgespeichert und über die Datenbusleitung DB an die Datenübertragungsschaltung HDLC abgegeben. In dieser Datenübertragungsschaltung HDLC erfolgt wiederum eine Parallel-Serien-Umsetzung der auftretenden digitalen Signale. Ferner erfolgt in dieser Datenübertragungsschaltung HDLC eine Behandlung der digitalen Signale, so daß diese gewissermaßen eine Formatwandlung bezogen auf das Format erfahren, mit dem sie von der Telex-Station Tx abgegeben worden sind. Die Datenübertragungsschaltung HDLC gibt die ihr zugeführten digitalen Signale in dem Format und mit der Datenübertragungsrate ab, die für die Teletex-Station Ttx maßgebend ist. Wie oben bereits erwähnt, werden die betreffenden digitalen Signale dabei über die entsprechend eingestellte Weichenschaltung MUX an die Anschlußschaltung SAGD1 der Datenvermittlungsanlage EDS abgegeben. Über die Anschlußschaltung SAGDn werden die betreffenden digitalen Signale von der Datenvermittlungsanlage EDS dann schließlich an die Teletex-Station Ttx abgegeben.

Werden von der Teletex-Station Ttx digitale Signale abgegeben, um zu der Telex-Station Tx hin übertragen zu werden, so laufen folgende Vorgänge ab. Die betreffenden digitalen Signale gelangen zunächst über die Anschlußschaltung SAGDn in die Datenvermittlungsanlage EDS hinein, welche die betreffenden digitalen Signale über die Anschlußschaltung SAGD1 an die Umsetzeinrichtung TTU abgibt. Dabei nimmt die Datenübertragungsschaltung HDLC nunmehr eine Serien-Parallel-Umwandlung dieser seriell auftretenden digitalen Signale vor und gibt sie über die Datenbusleitung DB an den Speicher RAM ab. Nachdem sämtliche zu einer Nachricht gehörenden digitalen Signale in diesem Speicher RAM gespeichert sind, werden diese digitalen Signale wieder aus diesem Speicher RAM ausgespeichert und über die Datenbusleitung DB an die Schnittstellenschaltung USARTa abgegeben. Dieser Vorgang läuft dabei mit einer Geschwindigkeit ab, die der Datenübertragungsrate entspricht, für die die Telex-Station Tx ausgelegt ist. In der Schnittstellenschaltung USARTa erfolgt schließlich noch eine Parallel-Serien-Umsetzung der aus dem Speicher RAM ausgespeicherten und an diese Schnittstellenschaltung abgegebenen digitalen Signale. Um den von der Schnittstellenschaltung USARTa abzugebenden digitalen Signalen das Format zu geben, welches für die Telex-Station Tx maßgebend ist, ist noch eine Formatumwandlung der zuvor von der Teletex-Station Ttx abgegebenen digitalen Signale vorzunehmen. Diese Formatumwandlung erfolgt in der Datenübertragungsschaltung HDLC.

Von der Schnittstellenschaltung USARTa der Umsetzeinrichtung TTU werden die für die Telex-Station Tx bestimmten digitalen Signale mit der Datenübertragungsrate und dem Datenformat abgegeben, mit der bzw. dem die Telex-Station Tx arbeitet. Diese digitalen Signale gelangen über die Anschlußschaltung SAGAn in die Datenvermittlungsanlage EDS hinein; sie werden von dieser Datenvermittlungsanlage EDS über die Anschlußschaltung SAGA1 sodann an die Telex-Station Tx abgegeben.

Im Zuge der vorstehend erläuterten Vorgänge ist die zu der einen Schnittstellenschaltung gehörende Signalisierungs-Umsetzschaltung USARTd noch nicht betrachtet worden. Diese Umsetzschaltung wird im vorliegenden Fall während der sogenannten Signalisierungsphase benutzt, d. h. während der Zeitspanne der Abgabe von Signalisierungsinformationen von der Teletex-Station Ttx oder von der Telex-Station Tx. Dabei ermöglicht der Einsatz dieser Umsetzschaltung USARTd eine andere Behandlung dieser Signalisierungsinformationen als dies in der Datenübertragungsschaltung HDLC der Fall wäre. Insbesondere kann somit von den Telex-Stationen und von den Teletex-Stationen mit unterschiedlichen Signalisierungsprozeduren gearbeitet werden, bezüglich derer durch die Umsetzschaltung USARTd eine entsprechende Umsetzung erfolgt.

Um je nach Art der zu übertragenden digitalen Signale — entweder Signalisierungsinformation oder Nachrichteninformation — die Umsetzschaltung USARTd oder die Datenübertragungsschaltung HDLC wirksam schalten zu können, sind von dem Mikroprozessor MP der Steuerschaltung entsprechende Steuerinformationen über die Steuerbusleitung CB abzugeben. Derartige Steuersignale mag der Mikroprozessor MP jeweils zu bestimmten Zeitpunkten während der jeweiligen Übertragung von digitalen Signalen zu bzw. von dem Speicher RAM abgeben. Dies bedeutet, daß der Mikroprozessor MP entsprechende Steuersignale an die Umsetzschaltung USARTd während der sogenannten Signalisierungsphase und entsprechende Steuersignale an die Datenübertragungsschaltung HDLC während der Textübertragungsphase abgibt. Die für die Ansteuerung der erwähnten Umsetzschaltung USARTd bestimmten Steuersignale treten dabei während jeder Signalisierungsphase auf, d. h. während der Zeitspanne der Abgabe einer Signalisierungsinformation vom bzw. zum Speicher RAM. Die Schnittstellenschaltungen können dabei so ausgebildet sein, daß sie das Auftreten von Signalisierungsinformationen erkennen und daraufhin entsprechende Unterbrechungssignale an den Mikroprozessor MP abgeben. Um die in diesem Zusammenhang tatsächlich ablaufenden Vorgänge zu verdeutlichen, sei nachstehend eine mögliche Übertragungsprozedur von digitalen Signalen zwischen einer Teletex-Station und einer Telex-Station betrachtet.

Die von einer Teletex-Station, wie der in der Zeichnung angedeuteten Teletex-Station Ttx, abgegebene Signalisierungsinformation gelangt über die Datenvermittlungsanlage EDS zu der Umsetzschaltung USARTd und auch zu der Datenübertragungsschaltung HDLC der Umsetzeinrichtung TTU hin. Von diesen Schaltungen ist jedoch lediglich die Umsetzschaltung USARTd wirksam, um die Signalisierungsinformation so umzuändern, daß sie für die Ansteuerung der gewünschten Telex-Station paßt. Die betreffende Umsetzschaltung USARTd führt ihre entsprechende Funktion aus, nachdem sie von dem Mikroprozessor MP her entsprechend adressiert angesteuert ist. Dieser Mikroprozessor MP kann zur Abgabe des betreffenden Steuersignals von der jeweiligen Schnittstellenschaltung selbst her veranlaßt werden, und zwar durch die bereits erwähnte Ansteuerung an einem seiner Unterbrechungseingänge.

Die von der erwähnten Umsetzschaltung USARTd abgegebene Signalisierungsinformation gelangt dann in den Speicher RAM und über die Schnittstellenschaltung USARTa zu der Datenvermittlungsanlage EDS hin, um über diese Vermittlungsanlage die gewünschte Telex-Station, wie an die Station Tx, abgegeben zu werden. Dieser zuletzt erwähnte Vorgang kann ausgeführt werden, um die Erreichbarkeit der Telex-Station Tx zu überprüfen. Ist die betreffende Telex-Station erreichbar, so kann ein entsprechendes Erreichbarkeits-Quittungssignal von dieser Telex-Station an die Umsetzeinrichtung TTU abgegeben werden. Dieses Erreichbarkeits-Quittungssignal gelangt dann über die Schnittstellenschaltung USARTa zu der Umsetzschaltung USARTd hin, welche in dem Fall, daß die gewünschte Telex-Station tatsächlich erreichbar ist (d. h. an der Datenvermittlungsanlage EDS tatsächlich angeschlossen ist), über die Weichenschaltung MUX ein Anforderungssignal abgibt, welches über die Datenvermittlungsanlage EDS an die Teletex-Station Ttx abgegeben wird. Auf das Eintreffen dieses Anforderungssignals hin beginnt die Teletex-Station Ttx sodann mit der Abgabe der den eigentlichen Text darstellenden digitalen Signale. Diese digitalen Signale gelangen durch die Datenvermittlungsanlage EDS zu der Datenübertragungsschaltung HDLC der Umsetzeinrichtung TTU hin, um von dieser Schaltung in den Speicher RAM eingespeichert zu werden. Ist die gesamte Nachricht in dem Speicher RAM eingespeichert, so wird die gesamte Nachricht an die in Frage kommende Telex-Station Tx von der Umsetzeinrichtung TTU abgegeben. Dabei laufen die erläuterten Umsetzvorgänge bezüglich der Datenübertragungsrate und des Datenformats ab.

Nachdem die gesamte Nachricht an die gewünschte Telex-Station Tx abgegeben worden ist, kann diese ein Empfangs-Quittungssignal über das Datenvermittlungssystem EDS an die Umsetzeinrichtung TTU zurücksenden, um zu signalisieren, daß sie die Nachricht vollständig empfangen hat. Auf die Aufnahme dieses Empfangs-Quittungssignals hin kann die Umsetzeinrichtung TTU sodann an die Teletex-Station Ttx — welche die erwähnte Nachricht zuvor ausgesendet hatte — ein Bestätigungssignal aussenden, welches der Teletex-Station Ttx anzeigen mag, daß die von ihr zuvor ausgesendete Nachricht auch von der gewünschten Telex-Station empfangen worden ist.

Eine der vorstehend erläuterten Übertragungsprozedur entsprechende Übertragungsprozedur läuft auch dann ab, wenn Nachrichten von einer Telex-Station zu einer Teletex-Station zu übertragen sind. Auch in diesem Fall dient die Umsetzschaltung USARTd der Umsetzeinrichtung TTU dazu, in der jeweiligen Signalisierungsphase entsprechende Steuerungsvorgänge zu bewirken, nunmehr allerdings im Hinblick auf die Übertragung von digitalen Signalen von der betreffenden Telex-Station zu der Teletex-Station hin.

Im Zusammenhang mit den zuletzt betrachteten Übertragungsprozeduren sei noch angemerkt, daß dabei vorzugsweise so vorgegangen sein kann, daß die Rufnummern der jeweils rufenden Station und der jeweils anzurufenden Station in dem Speicher RAM der Umsetzeinrichtung TTU mit abgespeichert werden. In diesem Fall ist es dann möglich, im Zuge der Übertragung von digitalen Signalen von der einen Station zu der anderen Station (d. h. von einer Telex-Station zu einer Teletex-Station oder umgekehrt), zunächst eine Verbindung von der einen Station zu der Umsetzeinrichtung TTU aufzubauen, um lediglich die die anzurufende Station betreffende Signalisierungsinformation und die eigene Rufnummer abzugeben und sodann die betreffende Verbindung wieder auszulösen. Von der Umsetzeinrichtung TTU kann sodann gegebenenfalls durch Aufbau einer entsprechenden Verbindung geprüft werden, ob die gewünschte anzurufende Station auch erreichbar ist. Ist die betreffende Station tatsächlich erreichbar, was lediglich bedeutet, daß sie an dem Datenvermittlungssystem angeschlossen und betriebsbereit ist, so kann die Umsetzeinrichtung TTU anschließend eine Verbindung zu der Station aufbauen, die die rufende Station darstellt. Diese rufende Station kann anschließend die eigentlichen Nachrichtensignale aussenden, um nach deren Übertragung die betreffende Verbindung wieder auszulösen. Sodann kann die Umsetzeinrichtung TTU eine Verbindung zu der gewünschten anzurufenden Station hin aufbauen, um dieser dann die zuvor aufgenommenen Nachrichtensignale zuzuführen. Nach dieser Nachrichtenübertragung kann die Umsetzeinrichtung TTU dann die zuletzt erwähnte Verbindung auslösen, um nochmals eine Verbindung zu der Station hin aufzubauen, die als rufende Station zu betrachten ist. Über die zuletzt aufgebaute Verbindung wird dann der betreffenden rufenden Station das oben erwähnte Empfangs-Quittungssignal zugeführt. Im Anschluß daran wird auch diese Verbindung wieder ausgelöst.

Abschließend sei bezüglich der Umsetzeinrichtung TTU noch angemerkt, daß der in dieser Umsetzeinrichtung enthaltene Mikroprozessor MP zusammen mit dem bereits erwähnten Programmspeicher ROM die eigentliche Steuereinrichtung der Umsetzeinrichtung TTU darstellt. Aus dem betreffenden Programmspeicher ROM erhält der Mikroprozessor MP auf entsprechende Anforderung hin Befehlsinformationen für die Ausführung der jeweils vorzunehmenden Steuerungsvorgänge. Wie oben bereits erläutert, laufen derartige Vorgänge unter dem Einfluß von Unterbrechungssignalen ab, die wenigstens einem Unterbrechungseingang des Mikroprozessors MP zugeführt werden. Für die mit dem Mikroprozessor MP verbundenen Schaltungen der Umsetzeinrichtung TTU können kommerziell erhältliche Bausteine verwendet werden. Für die Schnittstellenschaltung USARTa und die Signalisierungs-Umsetzschaltung USARTd können Bausteine mit der Bezeichnung 8251 A der Firma Intel verwendet werden. Die Datenübertragungsschaltung HDLC kann durch einen oder mehrere Bausteine mit der Bezeichnung 8273 der Firma Intel gebildet sein. Die Weichenschaltung MUX kann eine herkömmliche Multiplexerschaltung sein, wie sie beispielsweise unter der Bezeichnung SN 74151 bekannt ist. Der Programmspeicher ROM kann durch Bausteine mit der Bezeichnung 2732 der Firma Intel gebildet sein, und der eigentliche Signalspeicher RAM kann durch Bausteine mit der Bezeichnung 2185 der Firma Intel gebildet sein. Als Mikroprozessor MP kann ein solcher des Typs 8085 der genannten Firma verwendet werden.

**Patentansprüche**

1. Schaltungsanordnung zur Übertragung von digitalen Signalen zwischen mit einer ersten Datenübertragungsprozedur und einem ersten Datenformat arbeitenden Sende- und/oder Empfangseinrichtungen (Tx) und mit einer von der ersten Datenübertragungsprozedur verschiedenen zweiten Datenübertragungsprozedur sowie mit einem von dem ersten Datenformat verschiedenen zweiten Datenformat arbeitenden Sende- und/oder Empfangseinrichtung (Ttx) über eine Vermittlungsanlage (EDS),
wobei die für einen Betrieb mit der ersten Datenübertragungsprozedur und dem ersten Datenformat ausgelegten Sende- und/oder Empfangseinrichtungen (Tx) und die für einen Betrieb mit der zweiten Datenübertragungsprozedur und dem zweiten Datenformat ausgelegten Sende- und/oder Empfangseinrichtung (Ttx) an für die jeweilige Datenübertragungsprozedur und das jeweilige Datenformat vorgesehenen gesonderten Anschlußschaltungen (SAGA1; SAGDn) einer ersten Gruppe bzw. einer zweiten Gruppe von Anschlußschaltungen (SAGA1 bis SAGAn; SAGD1 bis SAGDn) der Vermittlungsanlage (EDS) angeschlossen sind,
und wobei an wenigstens einer Anschlußschaltung (SAGAn; SAGD1) jeder Gruppe der Anschlußschaltungen eine Umsetzeinrichtung (TTU) angeschlossen ist, in die jeweils sämtliche von einer Sendeeinrichtung abgegebene, zu einer Nachricht gehörende Signale entsprechend der ersten Datenübertragungsprozedur und mit dem ersten Datenformat bzw. entsprechend der zweiten Datenübertragungsprozedur und mit dem zweiten Datenformat einschreibbar sind und aus der danach sämtliche zu der jeweiligen Nachricht gehörende Signale ausspeicherbar und mit der zweiten bzw. mit der ersten Datenübertragungsprozedur und dem zweiten bzw. dem ersten Datenformat an die für eine Datensignalaufnahme in Frage kommende Empfangseinrichtung abgebbar sind, dadurch gekennzeichnet,
daß die Umsetzeinrichtung (TTU) eine Speicheranordnung (RAM) mit wahlfreiem Zugriff enthält, die mit ihrem Dateneingang/Datenausgang über Schnittstellenschaltungen (USARTa; USARTd, HDLC) an jeweils einer Anschlußschaltung (SAGTn; SAGD1) jeder Gruppe von Anschlußschaltungen angeschlossen ist,
daß die Schnittstellenschaltungen (USARTa; USARTd, HDLC) und die Speicheranordnung (RAM) mit einer Steuerschaltung (MP, ROM) verbunden sind, welche auf das Auftreten einer Bedienungsanforderung von einer der Schnittstellenschaltungen her, welche an einer Anschlußschaltung einer der beiden Gruppen von Anschlußschaltungen angeschlossen ist, zunächst eine Verbindung zwischen dieser Schnittstellenschaltung (z. B. USARTa) und der Speicheranordnung (RAM) und sodann eine Verbindung zwischen der Speicheranordnung (RAM) und einer Schnittstellenschaltung (USARTd, HDLC) herstellt, die an einer zu der anderen Gruppe von Anschlußschaltungen gehörenden Anschlußschaltung (SAGD1) angeschlossen ist,
daß die Steuerschaltung einen Mikroprozessor (MP) enthält, der mit einer Datenbusleitung (DB), einer Adreßbusleitung (AB) und einer Steuerbusleitung (CB) sowohl an den Schnittstellenschaltungen (USARTa; USARTd, HDLC) und an der Speicheranordnung (RAM) als auch an einem Programmspeicher (ROM) angeschlossen ist,
daß die an einer Anschlußschaltung der zweiten Gruppe von Anschlußschaltungen (SAGD1 bis SAGDn) angeschlossene Schnittstellenschaltung (USARTd, HDLC) mit ihrer Signalisierungs-Umsetzschaltung (USARTd) und mit ihrer Datenübertragungsschaltung (HDLC) eingangsseitig gemeinsam und ausgangsseitig über eine Weichenschaltung (MUX) an der betreffenden Anschlußschaltung (SAGD1) der zweiten Gruppe von Anschlußschaltungen angeschlossen ist,
und daß die Weichenschaltung (MUX) für die Übertragung von Datensignalen und Signalisierungsinformationen in unterschiedlichen Stellungen eingestellt ist.

2. Schaltungsanordnung nach Anspruch 1, dadurch gekennzeichnet, daß wenigstens eine Schnittstellenschaltung (USARTd, HDLC) mit einem Unterbrechungs-Steuereingang (Int) der Steuerschaltung (MP, ROM) verbunden ist, welche durch Aufnahme eines Unterbrechungssignals an diesem Eingang (Int) die Herstellung einer Verbindung zwischen der Speicheranordnung (RAM) und der Anschlußschaltung wirksam steuert, mit der die betreffende Schnittstellenschaltung verbunden ist.

3. Schaltungsanordnung nach Anspruch 1 oder 2, dadurch gekennzeichnet,
daß die an einer Anschlußschaltung der ersten Gruppe von Anschlußschaltungen (SAGA1 bis SAGAn) angeschlossene Schnittstellenschaltung (USARTa) zur Parallel-Serien-Umsetzung bzw. zur Serien-Parallel-Umsetzung der ihr eingangsseitig jeweils zugeführten Signale entsprechend ausgelegt ist,
und daß die an einer Anschlußschaltung der zweiten Gruppe von Anschlußschaltungen (SAGD1 bis SAGDn) angeschlossene Schnittstellenschaltung eine für die Aufnahme und Umsetzung von ihr eingangsseitig jeweils zugeführten Signalisierungsinformationen dienende Signalisierungs-Umsetzschaltung (USARTd) mit Serien-Parallel-/Parallel-Serien-Umsetzfunktionen und eine Datenübertragungsschaltung (HDLC) enthält, die lediglich bei der Datenübertragung zwischen der Speicheranordnung (RAM) und der Sende/Empfangseinrichtung (Ttx) wirksam ist, die an einer der zu der zweiten Gruppe von Anschlußschaltungen gehörenden Anschlußschaltungen (SAGD1 bis SAGDn) angeschlossen ist.

## Claims

1. Circuit arrangement for the transmission of digital signals between transmitting- and/or receiving devices (Tx) which operate in accordance with a first data transmission procedure and a first data format and a transmitting and/or receiving device (Ttx) which operates in accordance with a second data transmission procedure which differs from the first data transmission procedure and in accordance with a second data format which differs from the first data format, via an exchange (EDS), wherein the transmitting- and/or receiving devices (Tx), which are designed to operate in accordance with the first data transmission procedure and the first data format and the transmitting- and/or receiving device (Ttx) which is designed to operate in accordance with the second data transmission procedure and the second data format are connected to special connection circuits (SAGA1; SAGADn), provided for the data transmission procedure and data format in question, of a first and second group respectively of connection circuits (SAGA1 to SAGAn; SAGD1 to SAGDn) of the exchange (EDS), and wherein at least one connection circuit (SAGAn; SAGD1) within each group of connection circuits is connected to a converter device (TTU) into which all the signals which are emitted from a transmitting device and which belong to an item of information may be input in accordance with the first data transmission procedure and the first data format or in accordance with the second data transmission procedure and the second data format and from which subsequently all the signals belonging to the item of information in question may be output and may be emitted in accordance with the second or first data transmission procedure and the second or first data format to the receiving device which is appointed to receive data signals, characterised in that the converter device (TTU) contains a storage arrangement (RAM) having random access which is connected by its data input/data output via interface circuits (USARTa; USARTd, HDLC) to one connection circuit (SAGTn; SAGD1) within each group of connection circuits, that the interface circuits (USARTa; USARTd, HDLC) and the storage arrangement (RAM) are connected to a control circuit (MP, ROM) which in response to the occurrence of an operation request from one of the interface circuits which is connected to a connection circuit within one of the two groups of connection circuits firstly establishes a connection between this interface circuit (e.g. USARTa) and the storage arrangement (RAM) and then establishes a connection between the storage arrangement (RAM) and an interface circuit (USARTd, HDLC) which is connected to a connection circuit (SAGD1) belonging to the other group of connection circuits, that the control circuit contains a microprocessor (MP) which is connected by a data bus line (DB), by an address bus line (AB) and by a control bus line (CB) both to the interface circuits (USARTa; USARTd, HDLC) and to the storage arrangement (RAM) and to a programme store (ROM), that the interface circuit (USARTd, HDLC) which is connected to a connection circuit within the second group of connection circuits (SAGD1 to SAGDn) is connected with its signalling converter circuit (USARTd) and its data transmission circuit (HDLC) in common at the input side and via a switching circuit (MUX) at the output side to the relevant connection circuit (SAGD1) of the second group of connection circuits, and that the switching circuit (MUX) is set up for the transmission of data signals and items of signalling information in various positions.

2. Circuit arrangement as claimed in claim 1, characterised in that at least one interface circuit (USARTd, HDLC) is connected to an interrupt-control input (Int) of the control circuit (MP, ROM) which, by receiving an interrupt signal at this input (Int), actuates the establishment of a connection between the storage arrangement (RAM) and the connection circuit to which the interface circuit in question is connected.

3. Circuit arrangement as claimed in claim 1 or 2, characterised in that the interface circuit (USARTa) which is connected to a connection circuit within the first group of connection circuits (SAGA1 to SAGAn) is designed for the parallel-series conversion or series-parallel conversion of the signals with which it is supplied at its input, and that the interface circuit which is connected to a connection circuit within the second group of connection circuits (SAGD1 to SAGDn) contains a signalling converter circuit (USARTd) which serves to receive and convert items of signalling information with which it is supplied at its input and which possesses series-parallel/parallel-series conversion functions and further contains a data transmission circuit (HDLC) which is operative only in the event of data transmission between the storage arrangement (RAM) and the transmitting/receiving device (Ttx) which is connected to one of the connection circuits (SAGD1 to SAGDn) belonging to the second group of connection circuits.

## Revendications

1. Circuit pour la transmission de signaux numériques entre des dispositifs de réception et/ou d'émission (Tx), travaillant avec une première procédure de transmission de données et un premier format de données et des dispositifs de réception et/ou d'émission (Ttx) travaillant avec une seconde procédure de transmission de données différente de la première procédure de transmission de données ainsi qu'avec un second format de données différent du premier format de données, par l'intermédiaire d'une installation de commutation (EDS),

les dispositifs de réception et/ou d'émission (Tx) conçus pour fonctionner avec la première procédure de transmission de données et avec le premier format de données et les dispositifs de réception et/ou d'émission (Ttx) conçus pour fonctionner avec la seconde procédure de transmission de données et avec le second format de données étant raccordés à des circuits de raccordement distincts (SAGA1; SAGDn) prévus pour la procédure de transmission de données respective et le format de données respectif, d'un premier groupe ou respectivement d'un second groupe de circuits de raccordement (SAGA1 à SAGAn; SAGD1 à SAGDn) de l'installation de commutation (EDS), et au niveau d'au moins un circuit de raccordement (SAGAn; SAGD1) de chaque groupe de circuits de raccordement étant raccordé un dispositif de conversion (TTU) dans lequel tous les signaux appartenant à un message et délivrés par un dispositif d'émission peuvent être respectivement mémorisés en correspondance avec la première procédure de transmission de données et avec le premier format de données ou respectivement en correspondance avec la seconde procédure de transmission de données et avec le second format de données, et à partir duquel ensuite tous les signaux appartenant au message respectif peuvent être lus et délivrés, avec la seconde ou respectivement avec la première procédure de transmission de données et avec le second ou respectivement le premier format de données, au dispositif de réception dont il est question pour une réception de signaux de données, caractérisé par le fait que le dispositif de conversion (TTU) contient un dispositif de mémorisation (RAM) à accès sélectif dont l'entrée de données/sortie de données est reliée, par l'intermédiaire de circuits d'interface (USARTa; USARTd, HDLC), à un circuit de raccordement respectif (SAGAn; SAGD1) de chaque groupe de circuits de raccordement,

que les circuits d'interface (USARTa; USARTd, HDLC) et le dispositif de mémorisation (RAM) sont reliés à un circuit de commande (MP, ROM) qui, à l'apparition d'un appel de service d'un des circuits d'interface qui est relié à un circuit de raccordement d'un des deux groupes de circuits de raccordement, établit tout d'abord une liaison entre ce circuit d'interface (par ex. USARTa) et le dispositif de mémorisation (RAM) et ensuite une liaison entre le dispositif de mémorisation (RAM) et un circuit d'interface (USARTd, HDLC) qui est raccordé à un circuit de raccordement (SAGD1) appartenant à l'autre groupe de circuits de raccordement,

que le circuit de commande contient un microprocesseur (MP) qui est raccordé à une ligne omnibus de données (DB), à une ligne omnibus d'adresse (AB) et à une ligne omnibus de commande (CB) ainsi qu'aux circuits d'interface (USARTa; USARTd, HDLC) et au dispositif de mémorisation (RAM) et également à une mémoire de programme (ROM),

que le circuit d'interface (USARTd, HDLC) raccordé à un circuit de raccordement du second groupe de circuits de raccordement (SAGD1 à SAGDn) est raccordé au circuit de raccordement concerné (SAGD1) du second groupe de circuits de raccordement en commun par son circuit de conversion de signalisation (USARTd) et par son circuit de transmission de données (HDLC) côté entrée, et par l'intermédiaire d'un circuit d'aiguillage (MUX) côté sortie,

et que le circuit d'aiguillage (MUX) est réglé dans différentes positions pour la transmission de signaux de données et d'informations de signalisation.

2. Circuit suivant la revendication 1, caractérisé par le fait qu'au moins un circuit d'interface (USARTd, HDLC) est relié à une entrée de commande d'interruption (Int) du circuit de commande (MP, ROM) qui, lors de la réception d'un signal d'interruption sur cette entrée (Int), commande de façon efficace l'établissement d'une liaison entre le dispositif de mémoire (RAM) et le circuit de raccordement avec lequel est relié le circuit d'interface concerné.

3. Circuit suivant la revendication 1 ou 2, caractérisé par le fait que le circuit d'interface (USARTa) relié à un circuit de raccordement du premier groupe de circuits de raccordement (SAGA1 à SAGAn) est conçu pour la conversion parallèle-série ou la conversion série-parallèle des signaux qui lui sont respectivement appliqués à l'entrée,

et que le circuit d'interface relié à un circuit de raccordement du second groupe de circuits de raccordement (SAGD1 à SAGDn) contient un circuit de conversion de signalisation (USARTd), possédant des fonctions de conversion série-parallèle/parallèle-série et servant à la réception et à la conversion d'informations de signalisation qui lui sont respectivement appliquées à l'entrée, et un circuit de transmission de données (HDLC) qui est efficace uniquement lors de la transmission de données entre le dispositif de mémoire (RAM) et le dispositif d'émission/réception (Ttx) qui est relié à un des circuits de raccordement (SAGD1 à SAGDn) appartenant au second groupe de circuits de raccordement.